Europäisches Patentamt

(19) European Patent Office

Office européen des brevets

(11) Numéro de publication: **0 304 103**
**B1**

(12) **FASCICULE DE BREVET EUROPEEN**

(45) Date de publication du fascicule du brevet:
**09.05.90**

(51) Int. Cl.⁵: **F16D 65/16**

(21) Numéro de dépôt: **88201548.0**

(22) Date de dépôt: **18.07.88**

(54) **Pince de frein à disque pour véhicule.**

(30) Priorité: **28.07.87 IT 6765887**

(43) Date de publication de la demande:
**22.02.89 Bulletin 89/8**

(45) Mention de la délivrance du brevet:
**09.05.90 Bulletin 90/19**

(84) Etats contractants désignés:
**AT BE DE ES FR GB**

(56) Documents cités:
**DE-A- 2 748 499**
**FR-A- 1 566 027**
**FR-A- 2 077 739**
**FR-A- 2 280 832**
**FR-A- 2 495 252**
**FR-A- 2 549 921**

(73) Titulaire: **BENDIX ALTECNA S.p.A., Zona Industriale
Casella Postale 27, I-70026 Modugno (Bari)(IT)**

(72) Inventeur: **Zucca Poi, Bruno, Via Rua 24,
I-10081 Castellamonte (Torino)(IT)**

(74) Mandataire: **Lejet, Christian, BENDIX FRANCE Division
Technique Service Brevets Bendix Europe 126 rue de
Stalingrad, F-93700 Drancy(FR)**

## Description

La présente invention concerne une pince de frein à disque pour véhicule.

Une pince de frein inclut couramment un piston comme organe opératif qui a pour but de transformer la pression hydraulique, produite dans le liquide de l'installation de freinage par l'actionnement de la pédale de freinage, en une force qui doit être appliquée aux garnitures de frottements qui serrent le disque du frein, afin d'engendrer la force de friction qui donne lieu à l'action de freinage.

Le brevet FR-A 1 566 027 décrit un piston en cuvette formé par une pièce en tôle emboutie et dont la paroi terminale présente une coubure concave vers l'extérieur; ce piston, ainsi décrit, vient se loger dans un corps de pince de frein conventionnel dont la culasse est plane. Il s'ensuit une augmentation inutile de la capacité du cylindre recevant le piston. De plus, l'encombrement et le poids de la pince sont inchangés.

Le but de la présente invention est de réaliser une pince de frein qui soit plus légère et moins encombrante que les pinces connues, tout en présentant la résistance mécanique nécessaire lors d'une action de freinage.

L'invention propose donc une pince de frein à disque comportant un corps dans lequel est formé un cylindre hydraulique dans lequel coulisse un piston comme organe opératif, ledit piston comportant une culasse en forme sensiblement de coupole, et étant réalisé par emboutissage d'une tôle métallique.

Selon l'invention, le cylindre hydraulique est fermé à son extrémité par une culasse en forme de coupole, la culasse du cylindre ayant une courbure suivant substantiellement la courbure de la culasse du piston.

L'invention sera mieux comprise et d'autres buts, avantages et caractéristiques apparaîtront plus clairement à la lecture de la description qui suit de deux formes de réalisations, ayant le caractère d'exemples non limitatifs, schématiquement représentées dans le dessin annexé, dans lequel:

- la Figure 1 montre en section une pince de frein à dique conforme à l'invention; et
- la figure 2 montre en section une pince de frein à disque illustrant un autre mode de réalisation de la présente invention.

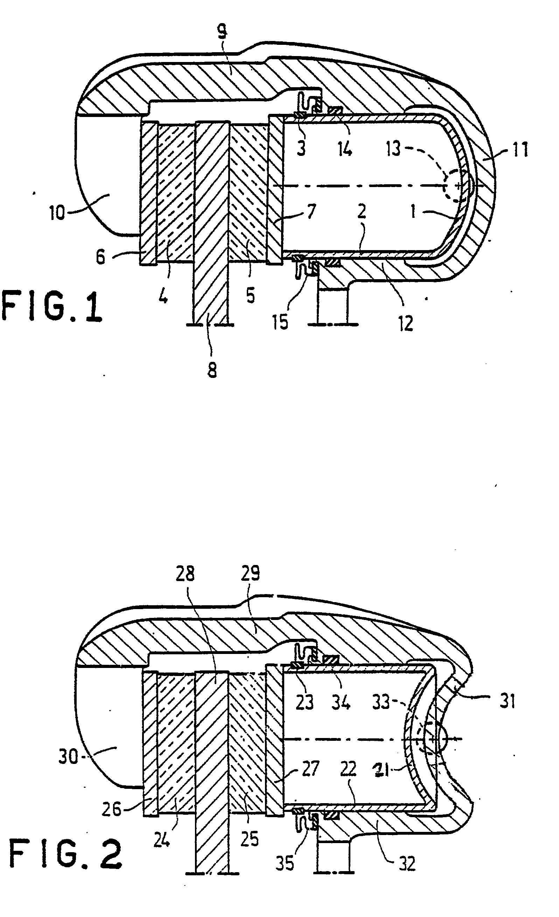

Faisant référence d'abord à la Figure 1, un piston comprend une culasse 1 qui dans ce cas est convexe, en forme substantiellement de coupole, dont le bord périphérique est raccordé à une jupe cylindrique 2 s'étendant sur la longueur prévue pour le piston. La jupe 2 peut éventuellement présenter vers son extrémité une gorge 3 pour l'ancrage d'un soufflet de protection. Le piston 1–2 est réalisé par emboutissage suivi par le découpage du matériau en excès.

L'emboutissage peut être effectué sur une tôle métallique relativement mince, par exemple d'une épaisseur de 2,5 mm. Une tôle ainsi mince est, malgré cela, capable de résister sans déformations appréciables à la grande pression hydraulique qui, dans le fonctionnement, sera appliquée à la culasse 1, et cela grâce à la forme en coupole de cette dernière, qui résulte en une sollicitation du matériau de la culasse essentiellement en compression et non en flexion.

Par l'emploi d'une tôle métallique ainsi mince, le poids du piston est récuit, dans l'ordre de la moitié ou moins, par rapport au poids d'un piston fabriqué suivant la technique connue. Typiquement, un piston suivant l'invention a un poids de 150 grammes environ, à rapporter au poids typiquement de 350 à 400 grammes d'un piston équivalent, réalisé suivant la technique traditionnelle.

Le piston est employé dans une pince spécialement dessinée à cet effet. La pince suivant la Figure 1 est destinée à appliquer à des garnitures de frottements 4 et 5, portées par des plaques de support 6 et 7, et agissant sur un disque de frein 8, une force donnant lieu au freinage. La pince comprend un corps 9 pourvu d'un côté de dents en console 10 formant pièce de réaction qui agit sur la plaque de support 6. Cu côté opposé, le corps 9 forme un cylindre 12 dans lequel est inséré le piston 1–2. Le cylindre 12 est fermé à son extrémité par une culasse 11. Dans le cylindre 12 débouche un raccord d'alimentation 13 par lequel le liquide sous pression de l'installation de freinage arrive au cylindre 12. Une garniture 14 est disposée dans le cylindre 12 de sorte à faire étanchéité avec la jupe 2 du piston. Un soufflet 15 est disposé entre le cylindre 12 et la jupe 2 du piston pour protéger les surfaces en regard de toute pollution. Le soufflet 15 est ancré au piston au moyen de la gorge 3 lorsque celle-ci est prévue. Toutefois, dans certains cas la gorge 3 peut être omise, et le soufflet 15 est alors couplé simplement par friction avec la jupe 2 du piston.

La pince est conformée de telle manière que la culasse 11 du cylindre 12 a elle aussi une forme en coupole convexe, substantiellement similaire à la forme en coupole convexe de la culasse 1 du piston. Cette conformation réduit, d'une part, l'encombrement total du corps de la pince, et d'autre part évite une augmentation inutile de la capacité du cylindre 12 puisque les coupoles de cylindre 11 et du piston ont des formes complémentaires, la courbure de la culasse du cylindre suivant sensiblement la courbure de la culasse du piston. De plus, le corps de la pince jouit lui aussi d'un emploi plus avantageux du matériau constituant la culasse 11, laquelle peut être réalisée avec une épaisseur, et donc un poids, plus réduits. Ceci est très important parce que la pince du frein, dans laquelle le piston est utilisé, est l'un des composants non suspendus du véhicule, pour lesquels la réduction du poids est d'importance particulière. Tout ce qui a été dit ci-dessus au sujet du mode de réalisation de la Figure 1 peut être répété au sujet de la forme de réalisation suivant la Figure 2, mais avec cette différence, que sur cette Figure, les parties correspondantes à la Figure 1 sont indiquées par des numéros de référence augmentées de 20 unités, et elles ne sont pas décrites ultérieurement. Le piston a une culasse 21 en forme de coupole, laquelle toutefois, dans ce cas, est concave, vue de l'extérieur du piston. De la culasse s'étend une jupe cylindrique 22 éventuellement pourvue d'une gorge 23 pour l'ancrage d'un soufflet de protection; il est avantageux, comme il a été souligné précédémment, de réaliser la culasse 31 du cylindre 32 de façon à ce qu'elle présente une courbure suivant sensiblement la courbure de la culasse 21 du piston.

## Revendications

1. Pince de frein à disque comportant un corps (9; 29) dans lequel est formé un cylindre hydraulique (12; 32) dans lequel coulisse un piston (1–2; 21–22) comme organe opératif, le piston comprenant une culasse (1; 21) en forme sensiblement de coupole et étant realisé par emboutissage d'une tôle métallique, la pince étant caractérisée en ce que le cylindre hydraulique (12; 32) est fermé à son extrémité par une culasse (11; 31) en forme de coupole, la culasse (11; 31) du cylindre (12; 32) ayant une courbure suivant substantiellement la courbure de la culasse (1; 21) du piston qu'elle contient.

2. Pince de frein à disque selon la revendication 1, caractérisé en ce que la culasse du cylindre (11; 31), vue de l'extérieur de la pince, est convexe.

3. Pince de frein à disque selon la revendication 1, caractérisé en ce que la culasse du cylindre (11; 31), vue de l'extérieur de la pince, est concave.

## Patentansprüche

1. Bremssattel für eine Scheibenbremse, mit einem Körper (9; 29), in dem ein hydraulischer Zylinder (12; 32) gebildet ist, in welchem ein Kolben (1–2, 21–22) als Betätigungsorgan gleitet, wobei der Kolben einen Boden (1; 21) aufweist, der im wesentlichen die Form einer Kuppel hat und durch Tiefziehen aus einem Metallblech hergestellt ist, dadurch gekennzeichnet, daß der hydraulische Zylinder (12; 32) an seinem Ende durch einen Boden (11; 31) in Form einer Kuppel geschlossen ist, wobei der Boden (11; 31) des Zylinders (12; 32) eine Krümmung hat, die im wesentlichen der Krümmung des Bodens (1; 21) des darin befindlichen Kolbens folgt.

2. Bremssattel nach Anspruch 1, dadurch gekennzeichnet, daß der Boden des Zylinders (11; 31), gesehen von außerhalb des Bremssattels, konvex ist.

3. Bremssattel nach Anspruch 1, dadurch gekennzeichnet, daß der Boden des Zylinders (11; 31), gesehen von außerhalb des Bremssattels, konkav ist.

## Claims

1. Disc-brake clamp having a body (9; 29) in which a hydraulic cylinder (12; 32) is formed, in which a piston (1–2; 21–22) slides as the operative member, the piston comprising a substantially dome-shaped cylinder head (1; 21) and being obtained by pressing a metal sheet, the clamp being characterized in that the hydraulic cylinder (12; 32) is closed at its end by a dome-shaped cylinder head (11; 31), the cylinder head (11; 31) of the cylinder (12; 32) having a curvature which substantially follows the curvature of the cylinder head (1; 21) of the piston which it contains.

2. Disc-brake clamp according to Claim 1, characterized in that the cylinder head of the cylinder (11; 31), seen from outside the clamp, is convex.

3. Disc-brake clamp according to Claim 1, characterized in that the cylinder head of the cylinder (11; 31), seen from outside the clamp, is concave.

FIG.1

FIG.2